# EUROPÄISCHE PATENTSCHRIFT

(11) **EP 1 759 927 B1**
(45) Veröffentlichungstag und Bekanntmachung des Hinweises auf die Patenterteilung: **30.08.2017**
(21) Anmeldenummer: 06026465.2
(22) Anmeldetag: 05.04.2005
(51) Int. Cl.: B60R 13/04

(54) **Säulenblende für ein Kraftfahrzeug**
Vehicle pillar finisher
Enjoliveur pour un pilier de véhicule

(30) Priorität: 08.04.2004 DE 102004017520; 06.07.2004 DE 102004032682
(43) Veröffentlichungstag der Anmeldung: 07.03.2007
(62) Teilanmeldung aus: 05007452.5
(73) Patentinhaber: DURA Automotive Holdings U.K., Ltd., Birmingham, B35 7AG (GB)
(72) Erfinder: Schultze zur Wiesche, Jochen, 51143 Köln (DE); Bittner, Norfried, 58452 Witten (DE); Schulte, Martin, 58802 Balve (DE)
(74) Vertreter: Zinnecker, Armin

(56) Entgegenhaltungen:
- DE-A1- 3 815 719
- DE-U1- 20 201 528
- US-A- 4 591 204
- US-A1- 2004 006 923
- US-B1- 6 214 266
- PATENT ABSTRACTS OF JAPAN Bd. 013, Nr. 178 (M-819), 26. April 1989 (1989-04-26) & JP 01 009717 A (KATAYAMA KOGYO KK), 13. Januar 1989 (1989-01-13)

## Beschreibung

Die Erfindung betrifft eine Säulenblende aus Kunststoff, die an einem Kraftfahrzeug oder an einer Kraftfahrzeug-Türe befestigbar ist. Insbesondere ist die Säulenblende an einer Säule, insbesondere der A-Säule oder der D-Säule, des Kraftfahrzeugs oder der Kraftfahrzeug-Karosserie oder an einem im Wesentlichen vertikal verlaufenden Bauteil einer Kraftfahrzeug-Türe befestigbar.

Eine Säulenblende dieser Art ist aus der DE 202 01 528 U1 bekannt. Die Säulenblende umfasst insbesondere einen Deckschenkel mit einer Sichtfläche, die zur Außenseite des Fahrzeugs hin gerichtet ist, und Befestigungselemente zum Befestigen der Säulenblende an dem Kraftfahrzeug oder der Kraftfahrzeug-Türe. Bei diesen Befestigungselementen kann es sich insbesondere um eine U-förmige Aufnahme handeln, die einen Schenkel eines Fahrzeugblechs oder Türblechs umgreift. In der Säulenblende kann ferner eine Aufnahme für eine Scheibe vorgesehen sein, wobei zwischen einem Rand der Scheibe und dieser Aufnahme im Allgemeinen eine Dichtung angeordnet ist.

Säulenblenden der eingangs angegebenen Art können aus Metall hergestellt werden. Aus verschiedenen Gründen, insbesondere aus Kostengründen, werden allerdings bevorzugt Säulenblenden aus Kunststoff verwendet. Dabei wurden bisher nur diejenigen Funktionen der Säulenblende realisiert, die auch bei Säulenblenden aus Metall vorhanden gewesen sind.

Eine Säulenblende aus Kunststoff nach dem Oberbegriff des Anspruchs 1 ist aus der DE 38 15 719 bekannt.

Die DE 94 01 563 U1 offenbart eine Kunststoffleiste für Kraftfahrzeuge, die als verstärktes Kunststoff-Formteil ausgebildet ist.

Aufgabe der Erfindung ist es, eine verbesserte Säulenblende der eingangs angegebenen Art vorzuschlagen.

Erfindungsgemäß wird diese Aufgabe durch eine Säulenblende mit den Merkmalen des Anspruchs 1 gelöst. Die Säulenblende ist aus Kunststoff hergestellt. Das Kunststoff-Herstellungsverfahren, insbesondere das Kunststoffspritzverfahren, bietet allerdings die Möglichkeit, weitere Funktionen in die Säulenblende aus Kunststoff zu integrieren. Dadurch kann die Teilevielfalt reduziert werden. Es ist ferner möglich, die Gesamtqualität am Fahrzeug bei gleichzeitiger Kostenreduktion zu steigern.

In die erfindungsgemäße Säulenblende ist ein Befestigungselement für das Kraftfahrzeug oder die Kraftfahrzeug-Türe integriert, das als Clip ausgebildet ist. Der Clip umfasst einen Steg, an dem ein Hakenteil vorgesehen ist. Die Säulenblende weist eine U-förmige Aufnahme für ein angrenzendes Bauteil auf. Bei dem angrenzenden Bauteil kann es sich insbesondere um eine Fugendichtung, ein Zierteil, eine Schachtleiste, einen Teil der Innenverkleidung oder einen Keder zum Toleranzausgleich handeln. Die Säulenblende ist in mehreren Kunststoffkomponenten hergestellt. Die Oberfläche der Säulenblende ist hochglänzend hergestellt. Der Clip ist an die Säulenblende angespritzt.

Vorteilhafte Weiterbildungen der Erfindung sind in den Unteransprüchen beschrieben.

Die Erfindung ist insbesondere bei Säulenblenden anwendbar, die auf eine Säule, insbesondere die A-Säule oder die D-Säule der Karosserie eines Kraftfahrzeugs oder auf ein Bauteil einer Türe eines Kraftfahrzeugs aufgebracht wird.

Die Säulenblende kann folienhinterspritzt sein.

Nach einer weiteren vorteilhaften Weiterbildung weist die Säulenblende eine dekorative Deckschicht, vorzugsweise aus Kunststoff, und eine Tragschicht, vorzugsweise aus elastischem Kunststoff, auf.

Vorteilhaft ist es, wenn die Säulenblende eine transparente Deckschicht und eine undurchsichtige hintere Tragschicht aufweist.

Die Erfindung betrifft ferner ein Kraftfahrzeug oder eine Kraftfahrzeug-Türe, die durch eine erfindungsgemäße Säulenblende gekennzeichnet ist.

Ausführungsbeispiele der Erfindung werden nachstehend anhand der beigefügten Zeichnung im Einzelnen erläutert. In der Zeichnung zeigt
- Fig. 1: ein Kraftfahrzeug mit mehreren Säulenblenden in einer Seitenansicht,
- Fig. 2: eine Säulenblenden aus Kunststoff mit einer U-förmigen Aufnahme für eine Fugendichtung in einem Querschnitt,
- Fig. 3: einen Teil einer Säulenblende aus Kunststoff mit einer U-förmigen Aufnahme für ein Zierteil in einem Querschnitt,
- Fig. 4: einen Teil einer Säulenblende aus Kunststoff mit einer U-förmigen Aufnahme für eine Schachtleiste in einem Querschnitt,
- Fig. 5: einen Teil einer Säulenblende mit einer U-förmigen Aufnahme für einen elastischen Keder zum Toleranzausgleich in einem Querschnitt,
- Fig. 6: eine Säulenblende aus Kunststoff mit einer weichen Kunststoffkomponente, die als Fugendichtung ausgebildet ist, in einem Querschnitt,
- Fig. 7: eine Säulenblende aus Kunststoff mit einer weichen Kunststoffkomponente, die als Dichtlippe ausgebildet ist, in einem Querschnitt,
- Fig. 8: eine Säulenblende aus Kunststoff mit einer weichen Kunststoffkomponente, die als Abdeckelement ausgebildet ist, in einem Querschnitt,
- Fig. 9: eine Säulenblende aus Kunststoff mit einer weichen Kunststoffkomponente, die als Vorspannelement ausgebildet ist, in einem Querschnitt und
- Fig. 10: eine Säulenblende aus Kunststoff mit einem Befestigungs-element, das als Clip ausgebildet ist, in einem Querschnitt.

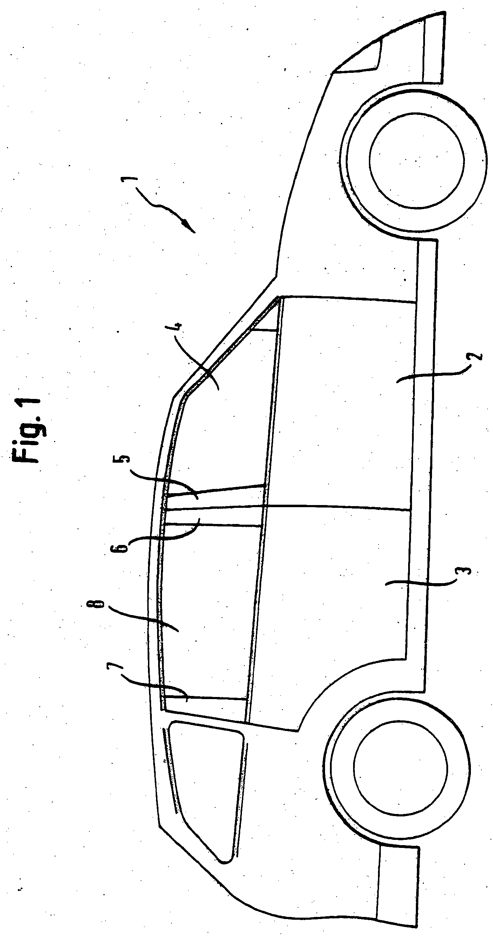

Das in Fig. 1 gezeigte Kraftfahrzeug 1 weist eine vordere Türe 2 und eine hintere Türe 3 auf. Der hintere Bereich der Scheibe 4 der vorderen Türe 2 ist durch eine Säulenblende 5 aus Kunststoff abgedeckt. Weitere, ebenfalls im wesentlichen vertikal verlaufende Säulenblenden 6, 7 aus Kunststoff sind im vorderen Bereich und im hinteren Bereich der Scheibe 8 der hinteren Türe 3 vorgesehen.

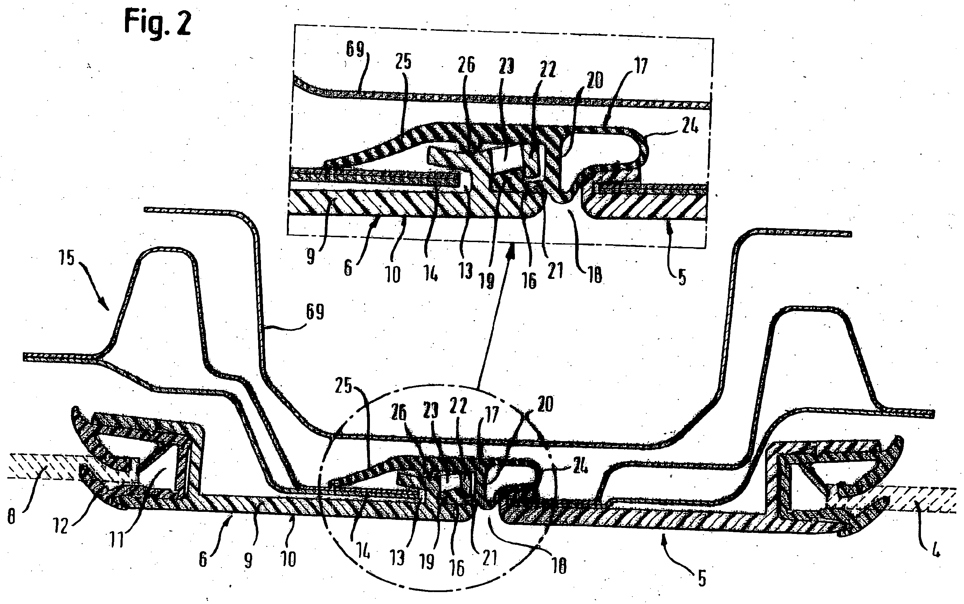

In Fig. 2 sind die Säulenblenden 5, 6 in einer vergrößerten Darstellung im Querschnitt gezeigt, wobei für den mittleren Bereich eine noch weiter vergrößerte Darstellung abgebildet ist. Die Säulenblende 6 umfaßt einen Deckschenkel 9 mit einer zum Fahrzeug-Äußeren hin gewandten Sichtfläche 10, eine U-förmige Aufnahme 11 für ein Dichtprofil 12 und die Scheibe 8 und eine U-förmige Aufnahme 13 für einen Schenkel 14 eines Türblechs 15. Auf der der U-förmigen Aufnahme 13 gegenüberliegenden Seite ist eine weitere U-förmige Aufnahme 16 für ein weiteres Bauteil vorhanden, nämlich für eine Fugendichtung 17, die die Fuge 18 zwischen den angrenzenden Säulenblenden 5, 6 abdichtet.

Die Fugendichtung 17 umfaßt einen Kopf 19, der in der U-förmigen Aufnahme 16 liegt und der mit dem Zentralbereich 20 der Fugendichtung 17 durch einen Steg 21 verbunden ist, der schmaler ist als der angrenzende Bereich des Kopfes 19. Ein Abschlußteil 22 der U-förmigen Aufnahme 16 ragt in den Bereich des Steges 21 hinein. Er hintergreift den Kopf 19, der hierdurch gegen unbeabsichtigtes Lösen gesichert ist. In dem Schenkel der U-förmigen Aufnahme 16, der an das Abschlußteil 22 angrenzt, sind Durchbrüche 23 vorhanden. Die U-förmigen Aufnahmen 13 und 16 werden durch die beiden Seiten eines T-förmigen Teils gebildet.

Auf der der Säulenblende 5 zugewandten Seite des Zentralbereichs 20 weist die Fugendichtung 17 einen Dichtbereich 24 auf, der ein geschlossenes Profil aufweist und dessen vorderer Bereich an der Säulenblende 5 anliegt. Auf der der Säulenblende 6 zugewandten Seite des Zentralbereichs 20 weist die Fugendichtung eine Verlängerung 25 auf, die sich zunächst parallel zum Deckschenkel 9 erstreckt und die innerhalb der Aufnahme 13 zum Schenkel 14 des Türblechs 15 hin abknickt. Das Ende der Verlängerung 25 liegt an dem Schenkel 14 an. Ferner weist der Schenkel 25 auf seiner Unterseite eine Ausbuchtung 26 auf, mit der sich die Verlängerung 25 an den inneren Schenkeln der U-förmigen Aufnahmen 13 und 16 abstützt.

Die Säulenblende 6 gemäß Fig. 2 ist mit einer zusätzlichen U-förmigen Aufnahme 16 versehen, die dazu dient, ein angrenzendes Bauteil, nämlich eine Fugendichtung 17, aufzunehmen. Das Blech 69 der Fahrzeugsäule verläuft im Abstand vom Türblech 15 und von der Fugendichtung 17; es folgt deren Konturen.

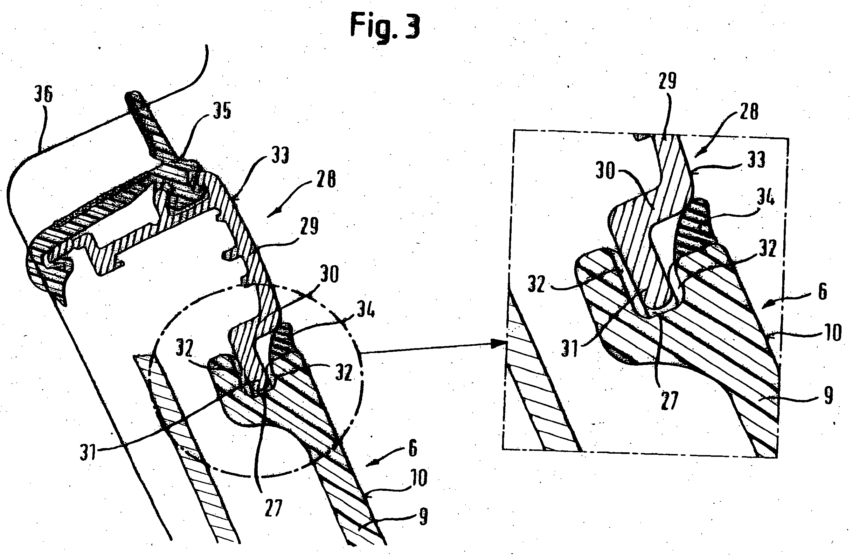

Fig. 3 zeigt eine abgewandelte Ausführungsform, bei der die Säulenblende 6 eine U-förmige Aufnahme 27 aufweist, die zur Aufnahme für ein angrenzendes Bauteil, nämlich eine Zierleiste 28 oder ein ähnliches Zierteil dient. Die Zierleiste 28 umfaßt einen Deckschenkel 29, die über einen abgekröpften Zwischenbereich 30 mit einer Einsteckleiste 31 verbunden ist, die parallel zu und im Abstand von dem Deckschenkei 29 verläuft. In der U-förmigen Aufnahme 27 sind beidseitig nach innen weisende Rippen 32 vorgesehen, die von den beiden Schenkeln der U-förmigen Aufnahme 27 nach innen vorstehen und deren Abstand voneinander etwas geringer ist als die Stärke der Einsteckleiste 31, so daß diese in der Aufnahme 27 reibschlüssig gehalten ist. In der in Fig. 3 gezeigten montierten Stellung fluchtet die Sichtfläche 33 des Deckschenkels 29 der Zierleiste 28 im wesentlichen mit der Sichtfläche 10 des Deckschenkels 9 der Säulenblende 6.

Die zwischen dem Deckschenkel 9 der Säulenblende 6 und dem Deckschenkel 29 der Zierleiste 28 liegende Lücke kann durch eine an die Säulenblende 6 angespritzte Fugendichtung 34 überdeckt werden. Die Fugendichtung 34 fluchtet im wesentlichen mit dem Deckschenkel 9 der Säulenblende 6.

Auf der der Säulenblende 9 gegenüberliegenden Seite ist die Zierleiste 28 mit einem Dichtungsprofil 35 verbunden, dessen Enden an dem schematisch angedeuteten Fahrzeugblech oder Türblech 36 anliegen.

Die U-förmige Aufnahme 27 ist derart ausgestaltet, daß durch sie auch ein Toleranzausgleich zwischen der Säulenblende 6 und der Zierleiste 28 möglich ist. Bei angrenzenden Bauteilen wie beispielsweise der Säulenblende 6 und der Zierleiste 28 zeigt sich oft das Problem, daß aus Toleranzgründen Spalte zwischen den Bauteilen entstehen oder daß derartige Spalte eine jeweils verschiedene Größe haben. Durch die direkte Aufnahme der angrenzenden Bauteile, also durch die Aufnahme der Zierleiste 28 in der U-förmigen Aufnahme 27 der Säulenblende 6, kann dieses Problem behoben werden. Die U-förmige Aufnahme 27 ist derart ausgestaltet, daß die beiden Bauteile, nämlich die Säulenblende 6 und die Zierleiste 28, immer definiert zueinander positioniert werden können, und zwar durch eine jeweils angepaßte Eintauchtiefe der Einsteckleiste 31 in die U-förmige Aufnahme 27.

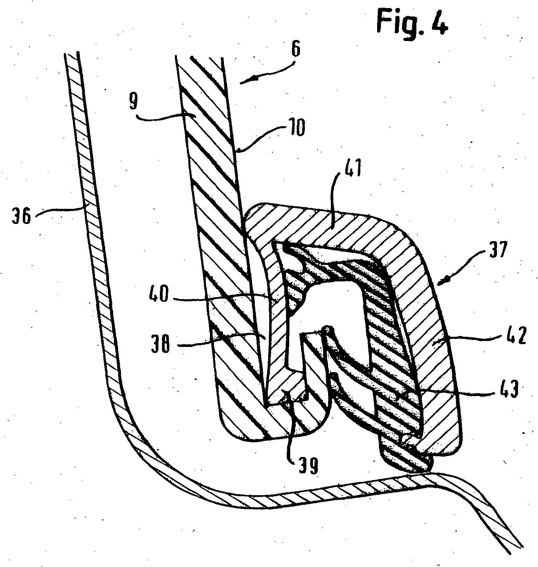

Fig. 4 zeigt eine Abwandlung, bei der die Säulenblende 6 mit einer Schachtleiste 37 verbunden ist. Auch hier weist der Deckschenkel 9 der Säulenblende 6 eine U-förmige Aufnahme 38 auf, die in diesem Fall allerdings zur Außenseite des Fahrzeugs hin gerichtet ist. Auf dem Grund der U-förmigen Aufnahme 38 liegt das verdickte Ende 39 eines Befestigungsschenkels 40 der Schachtleiste 37, dessen anderes Ende mit dem Innenschenkel 41 der Schachtleiste 37 verbunden ist. Der Außenschenkel 42 der Schachtleiste 37 steht vom Innenschenkel 41 in einem Winkel von etwas mehr als 90° ab. Innerhalb der Schachtleiste 37 befindet sich ein Dichtprofil 43, das die Schachtleiste 37 gegenüber der Säulenblende 6 und dem Fahrzeugblech oder Türblech 36 abdichtet.

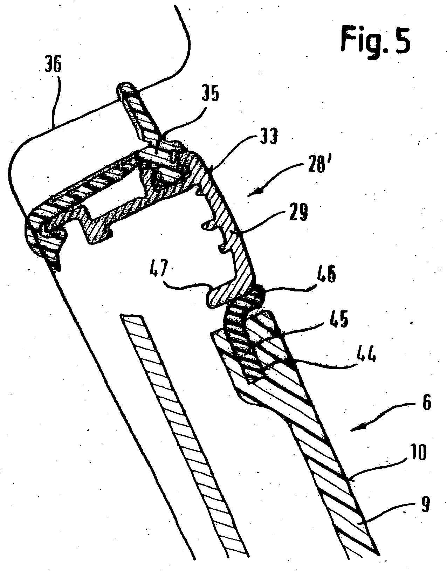

Bei der Ausführungsform nach Fig. 5 weist der Deckschenkel 10 der Säulenblende 6 eine U-förmige Aufnahme 44 auf, in die ein Keder 45 eingebracht ist. Der aus der Aufnahme 44 herausragende Bereich 46 des Keders legt sich elastisch an die Zierleiste 28' an, und zwar im Bereich zwischen dem Deckschenkel 29 und dem davon in einem etwa rechten Winkel nach innen abstehenden Schenkel 47 der Zierleiste 28'. Auch durch den elastischen Keder 45 kann das Problem der Toleranz zwischen der Säulenblende 6 und der Zierleiste 28' behoben werden. Der aus der Aufnahme 44 herausragende Bereich 46 des Keders 45 deckt den Spalt zwischen der Säulenblende 6 und der Zierleiste 28' ab. Dieser Bereich 46 wird in der aus Fig. 5 ersichtlichen Weise mehr oder weniger nach außen abgebogen. Der Keder 45 wird in die Aufnahme 44 eingesteckt. Durch die Elastizität des Keders 45 und insbesondere dessen aus der Aufnahme 44 herausragenden Bereichs 46 wird die gesamte Anordnung, bestehend aus Säulenblende 6, Keder 45, Zierleiste 28' und Dichtungsprofil 35, in dem Fahrzeugblech oder Türblech 36 kraftschlüssig gehalten. Die erwähnte Anordnung kann allerdings auch mit dem Fahrzeugblech oder Türblech 36 verklebt sein.

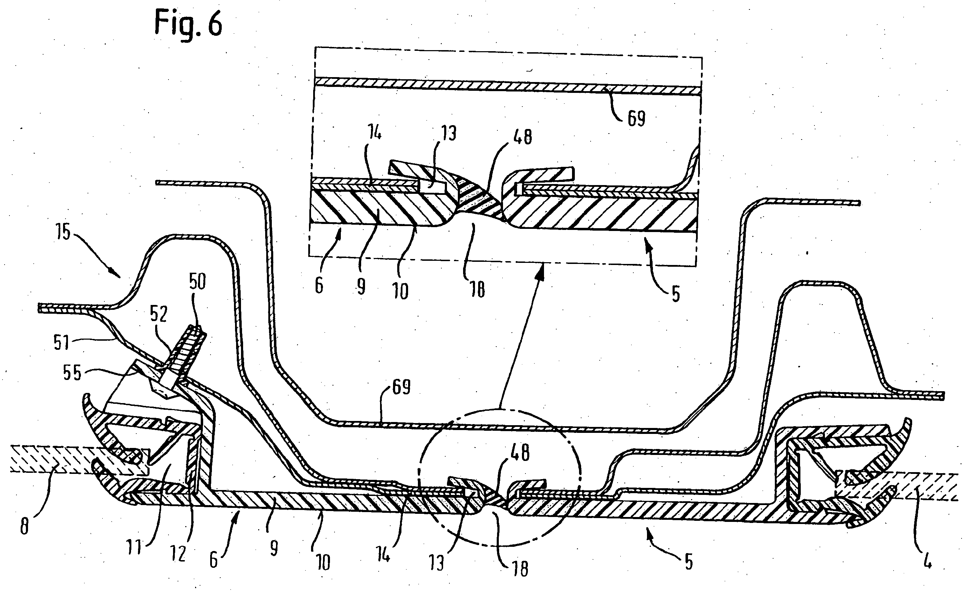

In Fig. 6 ist eine Ausführungsform gezeigt, bei der die Säulenblende 6 mit einer weichen Kunststoffkomponente versehen ist, die als Fugendichtung 48 ausgebildet ist. Die Fugendichtung 48 ist an die Säulenblende 6 angespritzt, und zwar auf der Außenseite der U-förmigen Aufnahme 13 für den Schenkel 14 des Türblechs 15. Sie fluchtet im wesentlichen mit dem Deckschenkel 9 der Säulenblende 6 und liegt mit ihrem äußeren Ende an der benachbarten Säulenblende 5 an, so daß sie die Fuge 18 zwischen den Säulenblenden 6, 5 vollständig überdeckt.

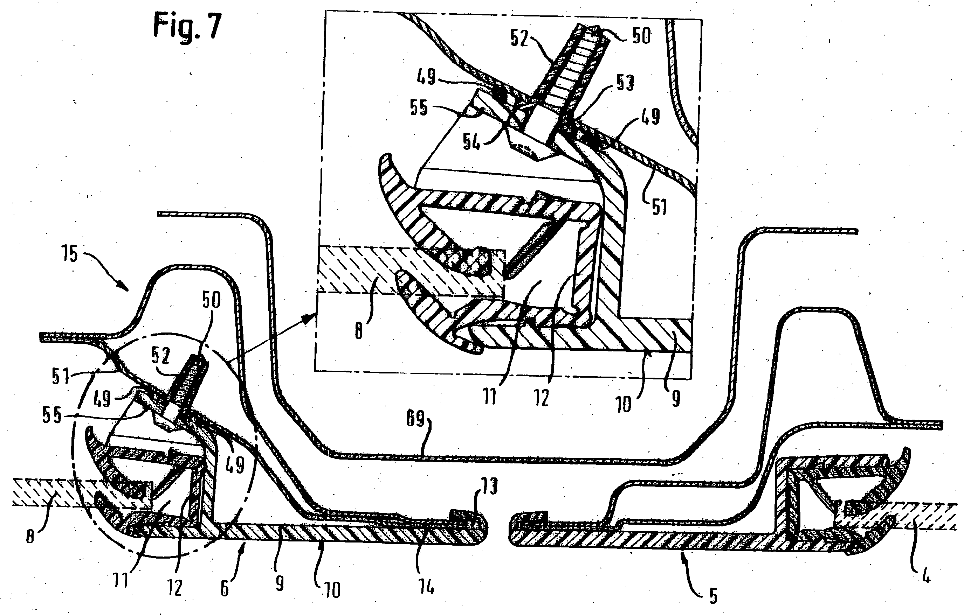

Bei der Ausführungsform nach Fig. 7 ist die Säulenblende 6 mit einer weichen Kunststoffkomponente versehen, die als Dichtlippe 49 ausgebildet ist. Hier ist die Säulenblende 6 durch eine Schraube 50 an einem schräg verlaufenden Blech 51 des Türblechs 15 befestigt, der in eine Hülse 52 eingreift, die in einen Durchbruch 53 des Blechs 51 eingesteckt ist und deren Kragen 54 zwischen dem Blech 51 und einem Schenkel 55 der Säulenblende 6 liegt. Die umlaufende Dichtlippe 49 verläuft im Abstand vom Kragen 54 der Hülse 52. Sie umschließt die Schraube 50 und liegt sowohl an dem Schenkel 55 der Säulenblende 6 als auch an dem Blech 51 des Türblechs 15 an.

Die Durchbrüche 53 dienen dazu, um die Säulenblende 6 an der Fahrzeug-Türe oder der Fahrzeug-Karosserie zu befestigen. Dies hat zur Folge, daß Wasser in die Türe oder Karosserie eindringen kann. Außerdem können Außengeräusche in das Innere des Fahrzeugs gelangen, die teilweise durch die Hohlräume der Türe oder Karosserie noch verstärkt werden können. Wie in der Ausführungsform nach Fig. 7 gezeigt, kann durch die als Dichtlippe 49 ausgebildete weiche Kunststoffkomponente der zur Befestigung dienende Durchbruch 53 abgedichtet werden. Zusätzliche Bauteile sind nicht erforderlich, der Komfort wird gesteigert (geringe Außengeräusche) und die Lebensdauer wird erhöht (keine Korrosion durch Wassereintritt).

Die als Dichtlippe 49 ausgestaltete weiche Kunststoffkomponente kann auch zum Toleranzausgleich eingesetzt werden. Durch unterschiedliches Anziehen des als Schraube ausgebildeten Bolzens 50 kann die Säulenblende in ihrer Position bei der Montage eingestellt werden. Dadurch läßt sich z.B. ein optimaler Fugenverlauf zwischen der Vordertür und der Hintertür am Fahrzeug gewährleisten. Insbesondere kann der als Schraube ausgebildete Bolzen 50 so weit eingeschraubt werden, daß die Sichtfläche 10 der Säulenblende 6 mit der Sichtfläche der Säulenblende 5 fluchtet.

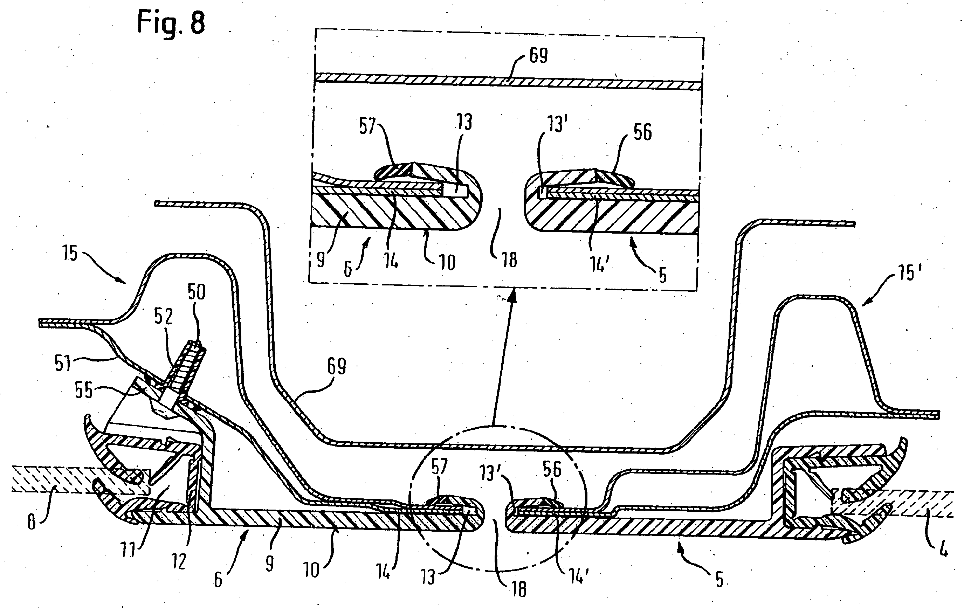

In Fig. 8 ist eine Ausführungsform gezeigt, bei der die Säulenblenden 5 und 6 mit jeweils einer weichen Kunststoffkomponente versehen sind, die als Abdeckelement 56, 57 ausgebildet sind. Die Anforderungen an die Optik bei einem Kraftfahrzeug sind sehr hoch. Insbesondere sollen sich im Sichtbereich keine Verbindungsstellen befinden. Bei Kraftfahrzeug-Türen sind allerdings im allgemeinen gerade im Bereich der Säulen Schweißpunkte, Klebstoffe oder Abdichtungen im Sichtbereich vorhanden. Die Abdeckelemente 56, 57 sind in die Säulenblenden 5, 6 integriert und decken diese Fügeverbindungen ab. Sie können eine zusätzliche Dichtfunktion übernehmen. Bei der Ausführungsform nach Fig. 8 fluchten die Abdeckelemente 56, 57 mit den inneren Schenkeln der U-förmigen Aufnahmen 13, 13' für die Schenkel 14, 14' der Türbleche 15, 15'. Die Abdeckelemente 56, 57 können allerdings auch seitlich angespritzt sein. Sie liegen mit ihren äußeren Enden an diesen Schenkeln 14, 14' an.

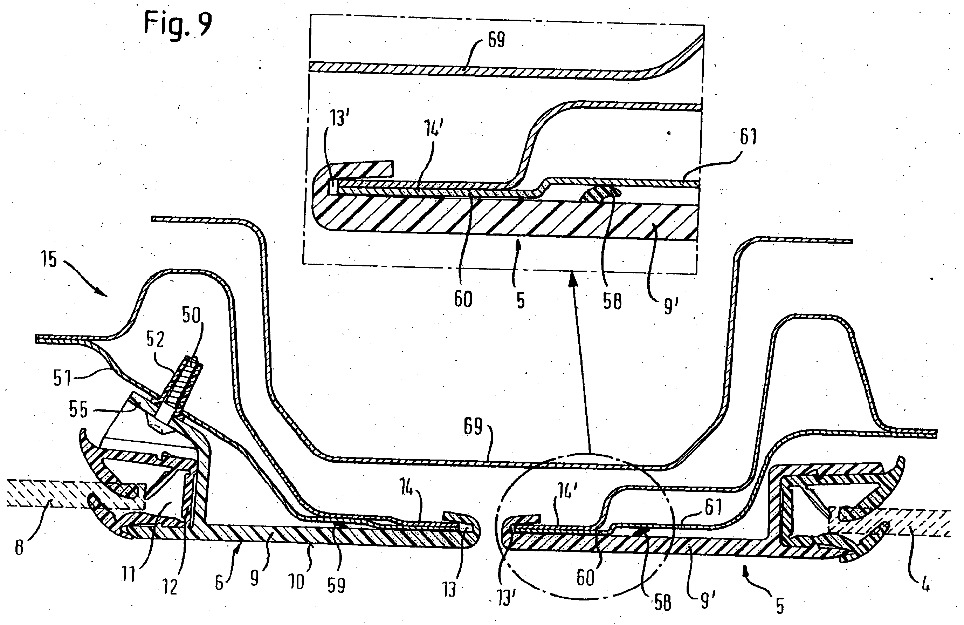

In Fig. 9 ist eine Ausführungsform dargestellt, bei der die Säulenblenden 5, 6 mit einer weichen Kunststoffkomponente versehen sind, die als Vorspannelement 58, 59 ausgebildet sind. Der Schenkel 14' des Türblechs der Säulenblende 5 besteht aus zwei aneinanderliegenden Blechen, die sich zur Scheibe 4 hin voneinander trennen. Das untere Blech 60 ist nach oben abgekröpft und verläuft im Bereich 61 im Abstand von und parallel zu dem Deckschenkel 9' der Säulenblende 5. Das Vorspannelement 58 ist an die Innenseite des Deckschenkels 9' angespritzt. Es wird durch den Bereich 61 des unteren Blechs 60 in die aus Fig. 9 ersichtlichen Weise nach unten verbogen. Hierdurch ist das Vorspannelement 58 zwischen dem Deckschenkel 9' und dem Bereich 61 des unteren Blechs 60 eingespannt. Durch das Vorspannelement 58, das als Lippe ausgestaltet ist und das sich zum Bereich 61 des unteren Blechs 60, also zur Fahrzeug-Türe oder zur Fahrzeug-Karosserie abstützt, kann eine gewisse Vorspannung der Säulenblende 5 erreicht werden. Dies gewährleistet einen festen Sitz der Säulenblende 5. Ferner kann dadurch eine Unempfindlichkeit gegenüber Toleranzen erreicht werden. Das als Lippe ausgebildete Vorspannelement 58 wirkt sich auch positiv auf eine möglicherweise auftretende Belastung, insbesondere schlagartige Belastung der Säulenblende 5 aus. Dadurch, daß die Säulenblende 5 durch das Vorspannelement 58 federnd aufliegt, wird die Gefahr einer Zerstörung der Säulenblende 5 bei insbesondere schlagartiger Belastung deutlich gemindert. Entsprechendes gilt für die in analoger Weise mit einem Vorspannelement 59 versehene Säulenblende 6.

Bei den Ausführungsformen nach Fig. 6 bis 9 wird auch eine Abdichtung gegen Außengeräusche bewirkt.

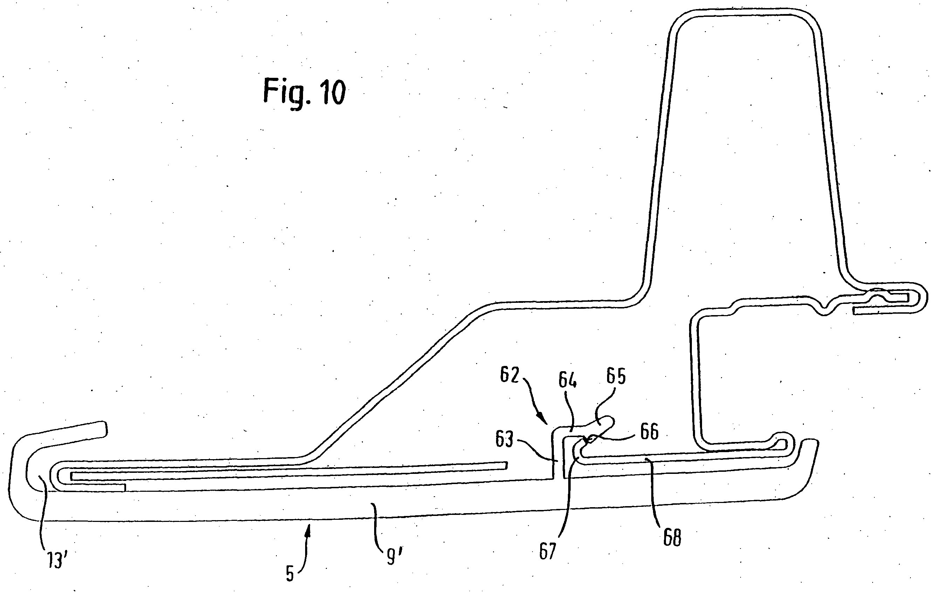

Fig. 10 zeigt eine Ausführungsform, bei der in die Säulenblende 5 ein Befestigungselement für das Kraftfahrzeug oder die Kraftfahrzeug-Türe integriert ist, welches als Clip 62 ausgebildet ist. Der Clip 62 umfaßt einen von dem Deckschenkel 9' der Säulenblende 5 im wesentlichen rechtwinkelig nach innen abstehenden Steg 63, an den sich ein horizontaler Bereich 64 anschließt, an dessen Ende ein schräg nach innen weisender Hakenteil 65 vorgesehen ist, der an seinem unteren, dem Steg 63 zugewandten Ende eine Anschlagfläche 66 aufweist, an der das Ende eines Hakens 67 anliegt, der an einem Blech 68 des Fahrzeugs oder der Fahrzeug-Türe ausgebildet ist. Hierdurch kann das Hakenteil 65 des Clips 62 mit dem Blech 68 des Fahrzeugs oder der Fahrzeug-Türe verhakt werden. Dadurch besteht die Möglichkeit, die Säulenblende 5 über einen angespritzten Clip 62 an der Karosserie oder der Türe zu befestigen. Insbesondere wird eine lösbare Befestigung ermöglicht.

Die Säulenblenden können in einem Kunststoff oder in mehreren Kunststoffkomponenten hergestellt sein. Die Oberfläche der Säulenblenden kann genarbt oder hochglänzend hergestellt werden.

Die Blende kann folienhinterspritzt sein. Dadurch kann ein dekorativer Effekt erzielt werden. Bestimmte Fahrzeugvarianten unterscheiden sich vom Basismodell durch bestimmte dekorative Aufdrucke auf den Blenden. Bei Kunststoffblenden besteht die Möglichkeit, eine Folie mit diesem Dekor direkt im Werkzeug zu hinterspritzen. Dadurch entfällt die aufwendige. Lackierung. Auch Blenden, die in Fahrzeugfarbe hergestellt werden sollen, lassen sich mit diesem Verfahren herstellen.

In der Blende können Logos, Typenbezeichnungen oder ähnliche Zeichen und Symbole direkt eingespritzt sein.

Die Blende kann in einer transparenten Deckschicht und einer undurchsichtigen hinteren Tragschicht gespritzt werden. Dabei besteht die Möglichkeit, durch Integration von Leuchtmitteln die Blende mit Leuchteffekten zu gestalten, insbesondere wie in der DE 103 22 187 A1 angegeben.

Die Säulenblende kann farbig gestaltet werden. Durch die Verwendung eines durchgefärbten Kunststoffes kann man die Blende direkt durchgefärbt im Spritzgießverfahren herstellen:

Die Säulenblende kann in einem fluoreszierenden Material gespritzt werden. Dadurch kann die Sicherheit im Dunkeln erhöht werden. Das Kraftfahrzeug kann besser erkannt werden.

## Patentansprüche

1. Säulenblende aus Kunststoff, die an einer Kraftfahrzeug-Türe befestigbar ist und die ein Befestigungselement (62) aufweist, das als Clip (62) ausgebildet ist, der einen nach innen abstehenden Steg (63) umfasst, an dem ein Hakenteil (65) vorgesehen ist,
**dadurch gekennzeichnet,**
**dass** die Säulenblende eine U-förmige Aufnahme (13') aufweist,
**dass** die Säulenblende in mehreren Kunststoffkomponenten hergestellt ist
und **dass** der Clip (62) an die Säulenblende (5) angespritzt ist

2. Säulenblende nach Anspruch 1, **dadurch gekennzeichnet, dass** die Säulenblende folienhinterspritzt ist.

3. Säulenblende nach Anspruch 1 oder 2, **dadurch gekennzeichnet, dass** die Säulenblende eine dekorative Deckschicht, vorzugsweise aus Kunststoff, und eine Tragschicht, vorzugsweise aus elastischem Kunststoff, aufweist.

4. Säulenblende nach einem der vorhergehenden Ansprüche, **dadurch gekennzeichnet, dass** die Säulenblende eine transparente Deckschicht und eine undurchsichtige hintere Tragschicht aufweist.

5. Kraftfahrzeug oder Kraftfahrzeug-Türe,
**gekennzeichnet durch**
eine Säulenblende nach einem der Ansprüche 1 bis 4.

## Claims

1. A plastic pillar finisher which can be fastened to a motor vehicle door and which has a fastening element (62) designed as a clip (62) comprising an inwardly projecting web (63) with a hook part (65) provided on it,
**characterized in that**
the pillar finisher has a U-shaped receptacle (13);
the pillar finisher is made of a plurality of plastic components; and
the clip (62) is injection-molded onto the pillar finisher (5).

2. A pillar finisher according to Claim 1, **characterized in that** the pillar finisher is back-sprayed with a film.

3. A pillar finisher according to Claim 1 or Claim 2, **characterized in that** the pillar finisher has a decorative top layer, preferably made of plastic, and a supporting layer, preferably made of flexible plastic.

4. A pillar finisher according to one of the preceding claims, **characterized in that** the pillar finisher has a transparent top layer and an opaque rear supporting layer.

5. A motor vehicle or motor vehicle door,
**characterized by**
a pillar finisher according to one of Claims 1 to 4.

## Revendications

1. Enjoliveur pour un pilier en matériau synthétique, qui peut être fixé à une porte de véhicule et qui présente un élément de fixation (62), qui est réalisé comme clip (62), qui comprend un élément jointif (63) en saillie vers l'intérieur, sur lequel est prévue une partie de crochet (65),
**caractérisé en ce que**
l'enjoliveur de pilier présente un logement en forme de U (13'),
l'enjoliveur de pilier est fabriqué en plusieurs composants en matériau synthétique
et le clip (62) est injecté sur l'enjoliveur de pilier (5).

2. Enjoliveur pour un pilier selon la revendication 1, **caractérisé en ce que** l'enjoliveur de pilier est soumis à un processus de décoration dans le moule.

3. Enjoliveur pour un pilier selon la revendication 1 ou 2, **caractérisé en ce que** l'enjoliveur de pilier présente une couche de recouvrement décorative, de préférence en matériau synthétique, et une couche de support, de préférence en un matériau synthétique élastique.

4. Enjoliveur pour un pilier selon l'une des revendications précédentes, **caractérisé en ce que** l'enjoliveur de pilier présente une couche de recouvrement transparente et une couche de support arrière non transparente.

5. Véhicule ou porte de véhicule,
**caractérisé par**
un enjoliveur pour pilier selon l'une des revendications 1 à 4.
